(19) Europäisches Patentamt
European Patent Office
Office européen des brevets

(11) **EP 3 251 034 B1**

(12) **EUROPEAN PATENT SPECIFICATION**

(45) Date of publication and mention
of the grant of the patent:
**16.02.2022   Bulletin 2022/07**

(21) Application number: **16754755.3**

(22) Date of filing: **22.02.2016**

(51) International Patent Classification (IPC):
**G06F 16/2453** (2019.01)

(52) Cooperative Patent Classification (CPC):
**G06F 16/24542; G06F 16/24532**

(86) International application number:
**PCT/CN2016/074239**

(87) International publication number:
**WO 2016/134646 (01.09.2016 Gazette 2016/35)**

(54) **QUERY OPTIMIZATION ADAPTIVE TO SYSTEM MEMORY LOAD FOR PARALLEL DATABASE SYSTEMS**

ADAPTIVE ABFRAGEOPTIMIERUNG JE NACH SYSTEMSPEICHERLAST FÜR PARALLELE DATENBANKSYSTEME

OPTIMISATION D'INTERROGATION ADAPTATIVE À UNE CHARGE DE MÉMOIRE SYSTÈME POUR DES SYSTÈMES DE BASES DE DONNÉES PARALLÈLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2015   US 201514631074**

(43) Date of publication of application:
**06.12.2017   Bulletin 2017/49**

(73) Proprietor: **Huawei Technologies Co., Ltd.**
**Shenzhen, Guangdong 518129 (CN)**

(72) Inventors:
• **LI, Huaizhi**
**Belmont, California 94002 (US)**
• **ZHANG, Guogen**
**San Jose, California 95120 (US)**

(74) Representative: **Gill Jennings & Every LLP**
**The Broadgate Tower**
**20 Primrose Street**
**London EC2A 2ES (GB)**

(56) References cited:
**CN-A- 101 201 842     CN-A- 101 594 371**
**CN-A- 103 345 447     US-A1- 2003 212 668**
**US-A1- 2006 164 414     US-A1- 2009 132 488**
**US-A1- 2014 188 841**

• **Anastasios Gounaris ET AL: "Adaptive Query Processing: A Survey" In: "Advances in Databases", 1 January 2002 (2002-01-01), Springer Berlin Heidelberg, Berlin, Heidelberg, XP055125172, ISBN: 978-3-54-043905-9 vol. 2405, pages 11-25, DOI: 10.1007/3-540-45495-0_2, * pages 11-21 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This description relates generally to databases, and more particularly to adaptively optimizing parallel database query execution plans based on system memory load.

BACKGROUND

Database systems are used to store information and relationship data that can be queried to find individual pieces of information, related pieces of information or relations between pieces of information. A typical parallel database system includes a coordinator node, or multiple coordinator nodes, along with multiple data processing nodes interconnected by a network.

In general, the coordinator nodes form the front end of the system that interfaces with client systems by way of the same or another network, and coordinates with the data processing nodes. Typically, parallel database clients submit queries to the coordination nodes, or coordinators, which in turn dispatch the queries to the data nodes for execution.

In some existing distributed parallel database systems, for example, massively parallel processing (MPP) database systems, multiple coordinator nodes and multiple data nodes together form a cluster of computing systems. In distributed database systems the tables of a database typically are divided into multiple sections, or partitioned, and the resulting partitions reside on multiple data nodes in the cluster.

In general, in both traditional, single-node, non-distributed relational database management systems and distributed relational database management systems, when a database receives a query, such as a structured query language (SQL) query, from a client the database system compiles the query, creates and optimizes a query execution plan, and executes the query execution plan. The database system then generates query results and sends the results back to the client.

In typical parallel database systems, the query plan compilation and optimization is carried out by the coordinator node, and the query is executed in parallel on all the nodes. Upon receiving a query, a coordinator invokes a query compiler to create a syntax tree based on the query. The query is parsed using aggregated statistics in the global catalog as if the database were running on single computer. The coordinator then invokes a query planner that processes the syntax tree, creates and compares all possible query execution plans, and outputs an optimal query execution plan.

The query plan typically is subdivided into segments and parallelized for the number of distributed data nodes or data partitions in system. Some query segments are executed on the coordinator nodes, and other query segments are executed on the data nodes. Thus, the coordinator sends the latter query plan segments to the various data nodes in the cluster for execution. Typically, the coordinator node passes the same query plan segment, or segments, to each of the individual data nodes, all of which execute the same query execution plan segment, or segments, against the various stored data partitions.

With regard to any particular query, the query planner considers multiple candidate query execution plans, any one of which the parallel database system is capable of processing and generating the results. For example, a typical query execution plan consists of database operators such as join, sort and aggregation operators. As an example, with regard to the join operator there are different join algorithms, including hash join, nested loop join and sort-merge join.

Since each operator has differing efficiencies, even though all of the candidate plans are able to determine the appropriate final query output, the cost of executing each of the plans varies substantially. The query planner takes into consideration system resources, such as memory and table partitions statistics, when optimizing the algorithms for database operators. The optimizer function of the query planner on the coordinator node determines the optimal plan, for example, making a choice between an external merge sort operation and a quick sort operation, or deciding between a hash join operation and a nested loop join operation.

In some existing solutions, the concept of work memory, the amount of system memory area or space currently available for use regarding the query, drives the determination of the optimal execution plan. In general, existing solutions apply the concept of a fixed work memory to optimize query plans, without taking into consideration the discrepancies between loading of different data nodes over time. As a result, all of the data nodes typically execute the same plan segment, which is not always the optimal plan with respect to each of the data nodes.

Thus, due to factors such as non-uniform distribution of database table partitions across the various data nodes and the dynamic change of memory availability on different data nodes over time, the fixed work memory configuration sometimes results in a non-optimal query plan being selected for the data nodes. For example, given a system with substantial available memory, if the predetermined work memory is too small the query planner selects an external sort for a sorting operation, even though a quick sort operation under the circumstances could be more efficient.

Such optimization errors can result in general database performance degradation. As a result, some existing query optimization methodologies can have drawbacks when used in distributed parallel database systems, since database query performance is of relatively high importance.

US 20030212668 relates to optimized database appliance.

SUMMARY

The present invention is defined in the appended claims. Further technical features are defined in the dependent claims.

The details of one or more embodiments of the invention are set forth in the accompanying drawings and the description below. Other features, objects, and advantages of the invention will be apparent from the description and drawings, and from the claims.\

DESCRIPTION OF THE DRAWINGS

FIG. 1 is a schematic drawing depicting a system for adaptively generating a query execution plan for a parallel database distributed among a cluster of data nodes.

FIG. 2 is a block diagram of an exemplary coordinator device implemented in a system for adaptively generating a query execution plan for a parallel database distributed among a cluster of data nodes.

FIG. 3 is a block diagram of an exemplary data node implemented in a system for adaptively generating a query execution plan for a parallel database distributed among a cluster of data nodes.

FIG. 4 is a flowchart representing a method of adaptively generating a query execution plan for a parallel database distributed among a cluster of data nodes.

FIG. 5 is a flowchart representing another method of adaptively generating a query execution plan for a parallel database distributed among a cluster of data nodes.

DETAILED DESCRIPTION

This disclosure describes a query plan optimization strategy for use in distributed relational database management systems in which query execution plans are adaptively determined based on current system memory availability. Instead of assuming a fixed work memory configuration, as in existing prior art technologies, the methods and devices described in this disclosure monitor the system load and memory availability on the distributed data processing nodes associated with the database cluster on a current and ongoing basis.

In an embodiment, a coordinator node determines the global work memory configuration using memory usage data received from memory load monitors on each of the data nodes and generates a query plan that is optimized for the current aggregate work memory available on the data nodes. In an alternative embodiment, each data node determines the local work memory configuration depending on the current memory usage and availability monitored at that node and modifies or re-optimizes the query plan for the current local work memory available on the data node. In the former embodiment the query plan is tailored to the cluster of data nodes, and in the latter embodiment the query plan is tailored for each of the individual data nodes.

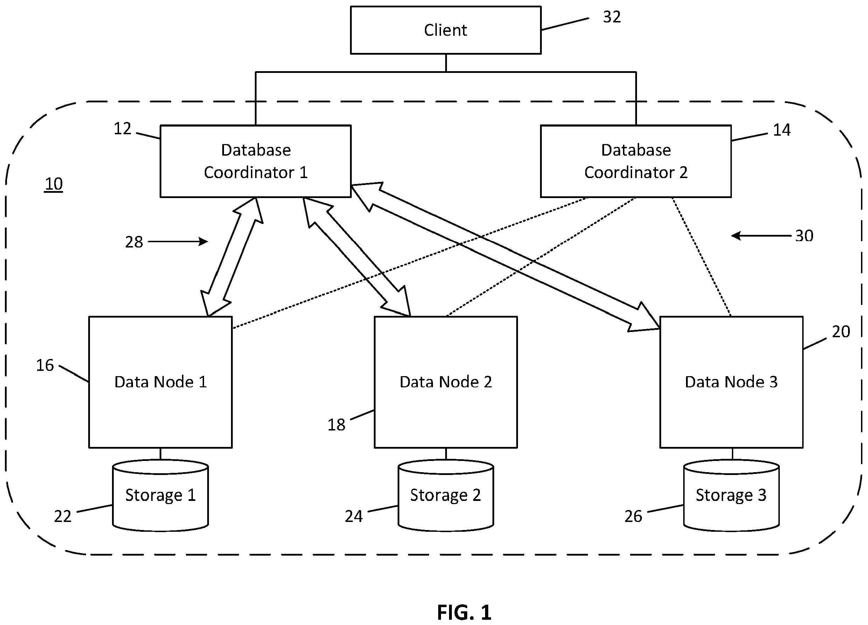

As illustrated in FIG. 1, a system 10 for adaptively generating a query execution plan for a parallel database distributed among a cluster of data nodes includes a pair of database coordinator nodes, or coordinators, 12, 14 and three data processing nodes, or data nodes, 16, 18, 20 having three storage devices 22, 24, 26, respectively. In various embodiments, the storage devices 22, 24, 26 is either integrated into or peripherally connected to the data nodes 16, 18, 20. The coordinator nodes 12, 14 are interconnected with each of the data nodes by data links 28, 30, including, for example, a communications network.

The storage devices 22, 24, 26 at the data nodes 16, 18, 20 each have stored a partition, or multiple partitions, of a distributed database table. Together, the storage devices 22, 24, 26 contain the information data for the complete database table.

In operation, the coordinator nodes receive query requests from a client node, or client, 32. As an example, referring still to FIG. 1, the coordinator node 12 receives a query request from the client 32. In response, the coordinator 12 compiles the query and creates a query plan. The coordinator 12 further subdivides the query plan into segments and send the query plan segments to each of the data nodes 16, 18, 20 by way of the data links 28, such as a network, for local execution on each of the data nodes 16, 18, 20.

As a result of the working environment, including factors such as data skew or input/output (I/O), the memory usage and availability at the various data nodes 16, 18, 20 sometimes is uneven. In an embodiment, each of the data nodes 16, 18, 20 monitors the memory usage at the individual data node 16, 18, 20 and sends memory usage data to each of the coordinators 12, 14. The coordinators 12, 14 use the memory usage data from all of the data nodes 16, 18, 20 to determine an aggregate work memory that represents the average amount of memory currently available on each of the data nodes 16, 18, 20 to be dedicated to locally executing the query plan on the data nodes 16, 18, 20. The coordinators 12, 14 optimize the query plans, or the query plan segments, for globally optimal execution performance on all the data nodes 16, 18, 20, and send the same query plan, or query plan segments, to all of the data nodes 16, 18, 20.

Similarly, in an embodiment each of the data nodes 16, 18, 20 monitors the memory usage at the individual data node 16, 18, 20. However, each of the individual data nodes 16, 18, 20 determines a local work memory that indicates the amount of memory currently available on the individual data node 16, 18, 20 to be dedicated to locally executing the query plan on the data node 16, 18, 20. Each of the individual data nodes 16, 18, 20 further performs localized query planning to adapt query plan segments received from one of the coordinators 12, 14 for optimal execution performance on the individual data node 16, 18, 20.

These implementations provide advantages with respect to existing solutions, which typically do not take actual system load or memory usage and availability variation among the data nodes into consideration, but rather presume a fixed work memory. By determining a more accurate work memory instead of a predetermined value, the implementations described in this disclosure can generate a more efficient query plan dynamically tailored to the actual working environment of the data nodes, and thus improve the overall performance of the distributed parallel database system.

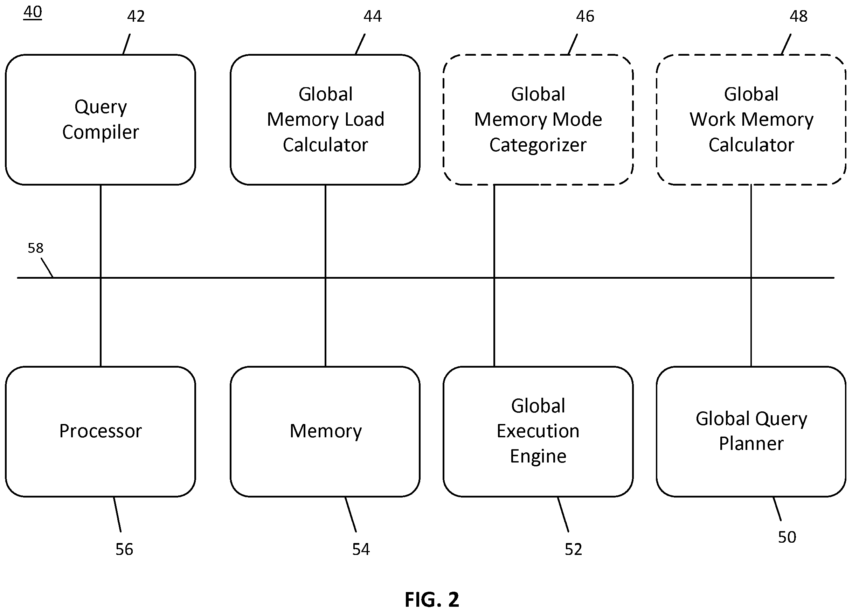

Referring to FIG. 2, a coordinator node, or coordinator, 40 implemented in the system 10 of FIG. 1 includes a query compiler 42, a global memory load calculator 44, a global memory mode categorizer 46, a global work memory calculator 48, a global query planner 50, a global execution engine 52, a memory 54 and a processor 56, all of which are interconnected by a data link 58. The coordinator 40 is configured to receive a query request, such as a structured query language (SQL) query request, from a client. Components shown with dashed lines in FIG. 2 are optional items that are not included in all implementations.

The query compiler 42 is configured to parse the received query request and create a syntax tree that corresponds to the query request. The global memory load calculator 44 calculates a global memory load that represents, for example, the average current memory load on the data nodes that form the cluster using memory usage data received from all the data nodes.

The global memory mode categorizer 46 assigns a global category, or mode, that indicates the approximate level of current memory usage or availability among the data nodes that form the cluster. The global memory mode categorizer 46 maps the current average memory load among the data nodes to one of three categories, for example, LIGHT, NORMAL and HEAVY, according to how heavy the current global memory load is throughout the system.

For example, the global memory mode categorizer 46 assigns the LIGHT mode when average memory usage among all the data nodes is below thirty percent (30%) of the total system memory capacity, assign the NORMAL mode when average memory usage among all the data nodes is from thirty percent (30%) to seventy percent (70%) of the total system memory capacity, and assign the HEAVY mode when average memory usage among all the data nodes is above seventy percent (70%) of the total system memory capacity.

Based on the currently assigned memory mode, the global work memory calculator 48 calculates the current global work memory for use in optimizing the query plan The current global work memory corresponds to the average memory space available on each of the data nodes that form the cluster. The global work memory calculator 48 uses a memory load factor corresponding to the current memory mode, or category, to compute the available global work memory according to the following formula:

$$work\_memory = system\_memory\_for\_query \times memory\_load\_factor$$

where

$$system\_memory\_for\_query = \frac{system\_memory - memory\_for\_bufferpool - other\_memory\_overhead}{connection\_number}$$

using the following definition for the memory load factor:

```
if memory_load == HEAVY
          memory load factor = 0.3;
if memory_load == LIGHT
          memory load factor = 0.9;
if memory_load == NORMAL
```

```
{
        if query is JOIN
                memory load factor = 0.6;
        else
                memory load factor = 0.5;
}
```

in addition to the following definitions:

> system_memory_for_query is the amount of memory available for query operations for each connection;
> system memory is the total amount of memory on an individual data node;
> memory for bufferpool is the amount of memory currently used for bufferpool;
> other_memory_overhead is the amount of memory currently used for log file caching, thread creation, and so on; and
> connection_number is the recent average number of connections to the database.

As a result, when the memory mode is LIGHT, query plans are generated based on a larger work memory suitable for doing relatively memory-intensive operations like building a hash table or a sort operation. This can be desirable, because even though query execution plans computed with larger work memory will likely to consume more memory resources, the query plans generally will execute with a faster response. Conversely, when the memory mode is HEAVY, query plans are computed based on a smaller work memory.

On the other hand, when the memory mode is NORMAL, queries are differentiated based on one or more features of the query. That is, a query with a higher probability of being relatively memory-intensive will be assigned a larger size work memory for query planning, and a query with a lower chance of being relatively memory-intensive will be assigned a smaller size work memory for query planning. Accordingly, the optimizer adaptively plans queries based on the current memory load situation, achieving dynamic memory utilization and better execution performance.

The global query planner 50 creates multiple alternative candidate query plans and determine the optimal plan using the calculated global work memory. The selected query plan generally results in improved query execution performance with respect to fixed work memory solutions, because the calculated global work memory more accurately reflects the system resources currently available on the distributed data nodes.

The global query planner 50 further divides the query plan into multiple segments to be forwarded to the data nodes, and then send one or more of the optimized query plan segments to each of the data nodes to be locally executed on the data nodes. The global execution engine executes portions of the query plan segments on the coordinator node 40.

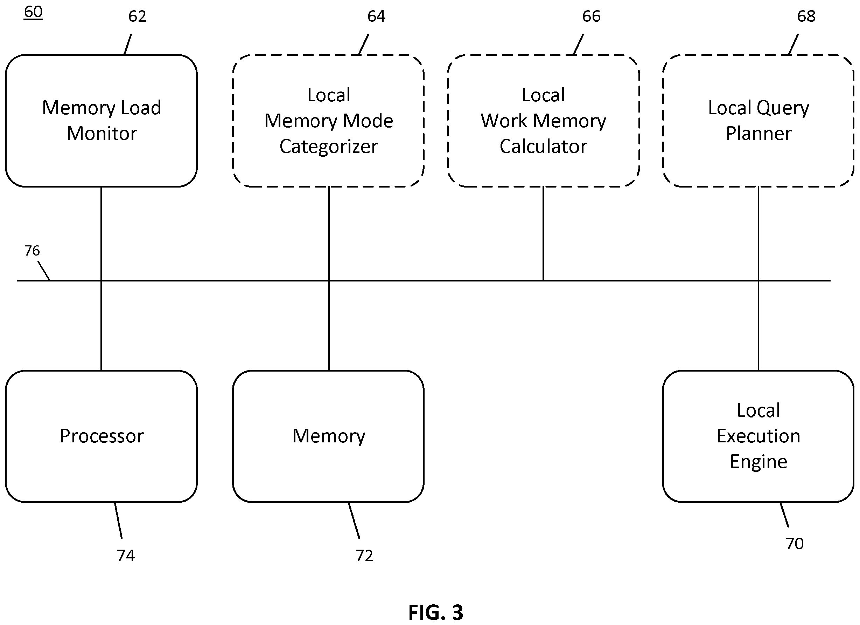

Referring to FIG. 3, a data processing node, or data node, 60 implemented in the system 10 of FIG. 1 includes a memory load monitor 62, a local memory mode categorizer 64, a local work memory calculator 66, a local query planner 68, a local execution engine 70, a memory 72 and a processor 76, all of which are interconnected by a data link 76. The data node 60 is configured to receive a query execution plan segment, or segments, from one of the coordinator nodes. Components shown with dashed lines in FIG. 2 are optional items that are not included in all implementations.

The memory load monitor 62 monitors system memory usage and availability in the data node 60. The data node 60 periodically sends memory usage and availability information to all the coordinator nodes. As described above with regard to FIG. 2, the coordinators use the memory usage and availability data to compute the average memory load of all the data nodes in the database cluster and map the memory load to a memory mode. The coordinator further calculates the work_memory, as described above, and generate a query plan for all the data nodes.

Referring again to FIG. 3, the local memory mode categorizer 64 assigns a local category, or mode, that indicates the approximate level of current memory usage or availability on the data node 60. The local memory mode categorizer 64 maps the current memory load of the data node 60 to one of three categories, for example, LIGHT, NORMAL and HEAVY, according to how heavy the current local memory load at the data node 60.

For example, the local memory mode categorizer 64 assigns the LIGHT mode when memory usage on the data node 60 is below thirty percent (30%) of the data node 60 memory capacity, assign the NORMAL mode when memory usage on the data node 60 is from thirty percent (30%) to seventy percent (70%) of the data node 60 memory capacity, and assign the HEAVY mode when memory usage on the data node 60 is above seventy percent (70%) of the data node 60 memory capacity.

Based on the currently assigned local memory mode, the local work memory calculator 66 calculates the current local work memory for use in adapting the plan segment to the current work environment at the data node 60. The current local work memory corresponds to the memory space available on the data node 60. For example, the local work memory calculator 66 uses a memory load factor corresponding to the current memory mode, or category, to compute the available local work memory according to the following formula:

$$work\_memory = system\_memory\_for\_query \times memory\_load\_factor$$

where

$$system\_memory\_for\_query = \frac{system\_memory - memory\_for\_bufferpool - other\_memory\_overhead}{connection\_number}$$

using the following definition for the memory load factor:

```
if memory_load == HEAVY
            memory load factor = 0.3;
if memory_load == LIGHT
            memory load factor = 0.9;
if memory_load == NORMAL
{
     if query is JOIN
            memory load factor = 0.6;
     else
            memory load factor = 0.5;
}
```

in addition to the following definitions:

system_memory_for_query is the amount of memory available for query operations for each connection;
system memory is the amount of memory on the data node 60;
memory for bufferpool is the amount of memory currently used for bufferpool;
other_memory_overhead is the amount of memory currently used for log file caching, thread creation, and so on; and
connection_number is the recent average number of connections to the database.

The local query planner 68 modifies or re-optimizes the query execution plan segment, or segments, using the calculated local work memory in order to adapt the plan segment, or segments, to the current local work environment. The modified or re-optimized query plan segment generally results in improved query execution performance with respect to fixed work memory solutions, because the calculated local work memory more accurately reflects the system resources currently available on the data node 60. In any embodiment, the local execution engine 70 executes the query execution plan segment, or segments, on the data node 60.

With regard to FIGS. 1-3, the coordinator nodes 12, 14, 40 and the data processing nodes 16, 18, 40, 60 includes a general computing device, and the memory 54, 42 and processor 56, 54 is integral components of a general computing device, such as a personal computer (PC), a workstation, a server, a mainframe computer, or the like. Peripheral components coupled to the general computing device further includes programming code, such as source code, object code or executable code, stored on a computer-readable medium that can be loaded into the memory 54, 52 and executed by the processor 56, 54 in order to perform the functions of the system 10.

Thus, in various embodiments, the functions of the system 10 is executed on any suitable processor, such as a server, a mainframe computer, a workstation, a PC, including, for example, a note pad or tablet, a PDA, a collection of networked servers or PCs, or the like. Additionally, as modified or improved versions of the system 10 are developed, for example, in order to revise or add a template or country-specific information, software associated with the processor is updated.

In various embodiments, the system 10 is coupled to a communication network, which can include any viable combination of devices and systems capable of linking computerbased systems, such as the Internet; an intranet or extranet; a local area network (LAN); a wide area network (WAN); a direct cable connection; a private network; a public network; an Ethernet-based system; a token ring; a value-added network; a telephony-based system, including, for example, T1 or E1 devices; an Asynchronous Transfer Mode (ATM) network; a wired system; a wireless system; an optical system; a combination of any number of distributed processing networks or systems or the like.

The system 10 is coupled to the communication network by way of the local data links 58, 56, which in various embodiments incorporates any combination of devices--as well as any associated software or firmware-configured to couple processor-based systems, such as modems, access points, network interface cards, serial buses, parallel buses, LAN or WAN interfaces, wireless or optical interfaces and the like, along with any associated transmission protocols, as desired or required by the design.

An embodiment of the present invention communicates information to the user and request user input, for example, by way of an interactive, menu-driven, visual display-based user interface, or graphical user interface (GUI). The user interface is executed, for example, on a personal computer (PC) or terminal with a mouse and keyboard, with which the user interactively inputs information using direct manipulation of the GUI. Direct manipulation can include the use of a pointing device, such as a mouse or a stylus, to select from a variety of windows, icons and selectable fields, including selectable menus, drop-down menus, tabs, buttons, bullets, checkboxes, text boxes, and the like. Nevertheless, various embodiments of the invention incorporates any number of additional functional user interface schemes in place of this interface scheme, with or without the use of a mouse or buttons or keys, including for example, a trackball, a touch screen or a voice-activated system.

In an exemplary implementation of the system 10 of FIG. 1, the coordinator nodes 12, 14 includes the query compiler 42, the global memory load calculator 44, the global memory mode categorizer 46, the global work memory calculator 48, the global query planner 50, the global execution engine 52, the memory 54 and the processor 56, while the data processing nodes 16, 18, 20 includes the memory load monitor 62, the local execution engine 70, the memory 72 and the processor 74. The data nodes 16, 18, 20 periodically send memory usage data monitored at the data nodes 16, 18, 20 to all the coordinator nodes 12, 14, and the coordinator nodes 12, 14 calculates the average memory load and global work memory, and generate and optimize query execution plan segments to be sent to and carried out on each of the data nodes 16, 18, 20.

As an example, memory load monitors associated with each of the data nodes 16, 18, 20 of FIG. 1 at a particular point in time determines that the data nodes 16, 18, 20 are currently operating at approximately ninety percent (90%), twenty-five percent (25%) and fifty percent (50%), respectively. The data nodes 16, 18, 20 subsequently passes this information on to both coordinator nodes 12, 14. Then, when one of the coordinator nodes 12, 14, say, for example, coordinator 12, processes a query request that has been received at the coordinator 12, the coordinator 12 computes the average memory load of the system as fifty-five percent (55%) and assign the current memory mode to the NORMAL category. The coordinator 12 further computes the available global work memory for the data nodes in accordance with the NORMAL memory mode and generate the same optimized plan segments for all the data nodes in light of the current work environment.

In an alternative implementation of the system 10 of FIG. 1, the coordinator nodes 12, 14 includes the query compiler 42, the global query planner 50, the global execution engine 52, the memory 54 and the processor 56, while the data processing nodes 16, 18, 20 includes the memory load monitor 62, the local memory mode categorizer 64, the local work memory calculator 66, the local query planner 68, the local execution engine 70, the memory 72 and the processor 74. The coordinator nodes 12, 14 generates global query execution plan segments and send these to all of the data nodes 16, 18, 20. The data nodes 16, 18, 20 monitor memory usage at the individual data nodes 16, 18, 20, calculate the local work memory, and modify or optimize the query execution plan segments for execution on the individual data nodes 16, 18, 20.

As an example, memory load monitors associated with each of the data nodes 16, 18, 20 of FIG. 1 at a particular point in time determines that the data nodes 16, 18, 20 are currently operating at approximately ninety percent (90%), twenty-five percent (25%) and fifty percent (50%), respectively. The data nodes 16, 18, 20 subsequently receive a query execution plan segment from one of the coordinator nodes 12, 14. The data node 16 assigns the current local memory mode to the HEAVY category, the data node 18 assigns the current local memory mode to the LIGHT category, and the data node 20 assigns the current local memory mode to the NORMAL category. Each of the data nodes 16, 18, 20 further computes the available local work memory in accordance with the HEAVY, LIGHT and NORMAL memory modes, respectively, and re-optimize the query plan segment in parallel for the each of the individual data nodes 16, 18, 20 in light of the current work environment at the corresponding individual data nodes 16, 18, 20. As a result, the query plan segments executed at each of the data nodes 16, 18, 20 differs.

In an example embodiment, a device for adaptively generating a query execution plan for a parallel database distributed among a cluster of data nodes includes a reception module receiving, with a processor, memory usage data from a plurality of data nodes comprising a plurality of network devices, a memory load module calculating a representative memory load corresponding to the data nodes based on the memory usage data, a memory mode module categorizing a memory mode corresponding to the data nodes based on the calculated representative memory load, a work memory module calculating an available work memory corresponding to the data nodes based on the memory mode, and a query execution module generating the query execution plan for the data nodes based on the available work memory, wherein the memory usage data is determined from a plurality of monitored individual memory loads associated with the data nodes and the query execution plan corresponds to the currently available work memory. In some embodiments, the device may include other or additional modules for performing any one of or combination of steps described in the embodiments.

In an example embodiment, a device for adaptively generating a query execution plan for a parallel database distributed among a cluster of data nodes includes a memory load module monitoring, with a processor, a memory load associated with a data node comprising a network device, a memory mode module categorizing a memory mode corresponding to the data node based on the memory load, a work memory module calculating an available work memory corresponding to the data node based on the memory mode, a query plan reception module receiving a query execution plan segment, and a query plan adaption module adapting the query execution plan segment for the data node based on the available work memory, wherein the data node is associated with the cluster and the query execution plan segment corresponds to the current available work memory. In some embodiments, the device may include other or additional modules for performing any one of or combination of steps described in the embodiments.

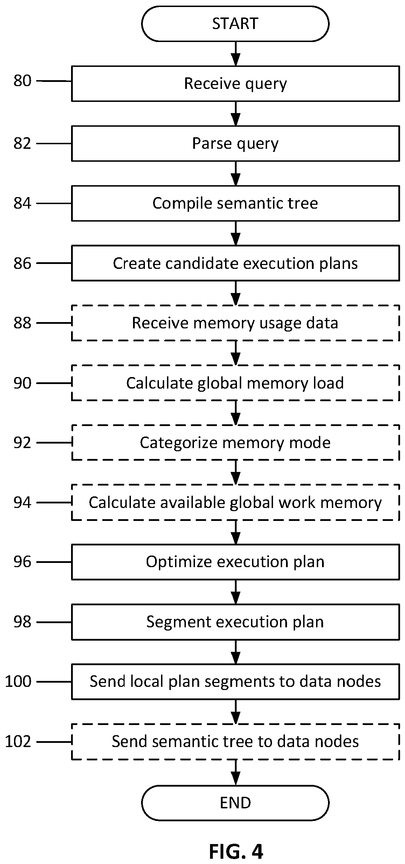

Referring now to FIG. 4, a process flow is illustrated that is performed, for example, by the coordinator node 40 of FIG. 2 to implement the method described in this disclosure for adaptively generating a query execution plan for a parallel database distributed among a cluster of data nodes. Blocks shown with dashed lines in FIG. 4 are optional actions, or events, that are not performed in all implementations. The process begins at block 80, where a query request, such as a structured query language (SQL) query is received, for example, from a client node.

In block 82, the received query is parsed, and in block 84 a syntax tree corresponding to the query is compiled. Multiple candidate query execution plans are created, in block 86, based on the syntax tree. Current memory usage or availability information regarding the individual data nodes are received in block 88, and in block 90 the current global memory load is calculated as described above using the received memory usage or availability data. In block 92, the memory mode is assigned to an appropriate category, as described above, corresponding to the current global memory load. The available global work memory is computed as described above, in block 94, and used in block 96 to optimize the query execution plan selected from among the candidate plans, as described above.

In block 98, the query execution plan is divided into multiple segments for distribution to the data nodes, and in block 100 the same query execution plan segment, or segments, is transmitted to all of the data nodes in the database cluster. Additionally, the compiled syntax tree is forwarded to the data nodes in block 102.

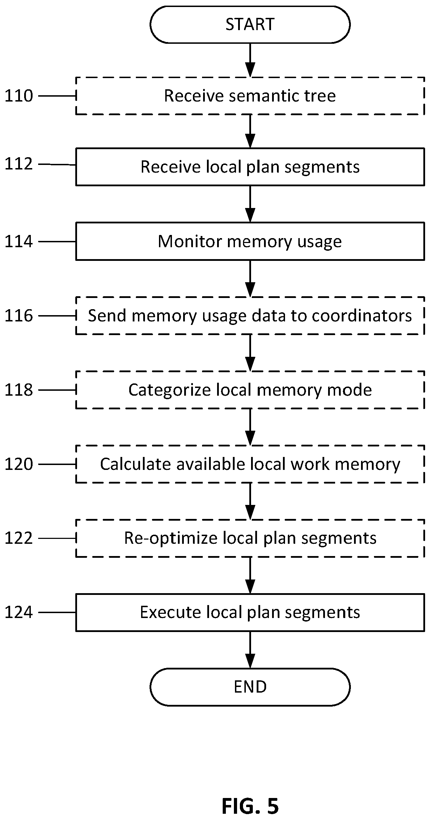

Referring now to FIG. 5, a process flow is illustrated that is performed, for example, by the data processing node 60 of FIG. 3 to implement the method described in this disclosure for adaptively generating a query execution plan for a parallel database distributed among a cluster of data nodes. Blocks shown with dashed lines in FIG. 5 are optional actions, or events, that is performed in all implementations. The process begins at block 110, where a query execution plan segment, or segments, are received. In block 112, a compiled syntax tree also is received.

In block 114, the current memory usage or availability of an individual data node is monitored. Optionally, in block 116 memory usage or availability information periodically is sent, for example, to all coordinator nodes. In block 118, the local memory mode is optionally assigned to a category, as described above, corresponding to the current memory usage or availability

The available local work memory is computed as described above, in block 120, and used in block 122 to modify or re-optimize the query execution plan segment, or segments, as described above. In block 124, the query plan segment, or segments, is executed on the data node.

In an exemplary implementation of the system 10 of FIG. 1, the coordinator nodes 12, 14 performs the actions or events described in blocks 80 through 102 of FIG. 4, while the data nodes 16, 18, 20 performs the actions or events described in blocks 112, 114, 116, and 124 of FIG. 5. Thus, the same query execution plan segment, or segments, which is optimized according to the dynamically-determined global work memory configuration across all the data nodes, is sent to all of the data nodes in the cluster.

In an alternative implementation of the system 10 of FIG. 1, the coordinator nodes 12, 14 performs the actions or events described in blocks 80 through 86, and blocks 96 through 100 of FIG. 4, while the data nodes 16, 18, 20 performs the actions or events described in blocks 110 through 114, and blocks 118 through 124 of FIG. 5. Thus, each data node throughout the cluster individually re-optimizes the query execution plan segment, or segments, in parallel using the dynamically-determined local work memory configuration corresponding to each individual data node.

As an example, the following query request is received by one of the coordinator nodes 12, 14 of FIG. 1, say, for example, by the coordinator 12:

select count(*) from lineitem,part where 1_partkey=p_partkey group by 1_partkey; In response, the coordinator 12 generates the following query execution plan segment and send the segment to the three data nodes 16, 18, 20 of FIG. 1:

QUERY PLAN

```
-------------------------------------------------------------------------------------

        GroupAggregate

            -> GATHER

               Node/s: All datanodes

                   -> GroupAggregate

                       -> Join

                           Condition: (lineitem.l_partkey = part.p_partkey)

-------------------------------------------------------------------------------------
```

The first three lines of the query plan segment are executed on the coordinator 12, while the aggregation and join operations are executed on each of the data nodes 16, 18, 20 in accordance with the current local memory mode category assigned to each of the data nodes 16, 18, 20 in light of the current work environment at the corresponding individual data nodes 16, 18, 20. Thus, for example, if the local memory mode of data node 16 currently is assigned to the HEAVY category, the data node 16 re-optimizes the query plan to carry out a sort-based aggregation operation and a nested loop join operation. At the same time, if the local memory modes of the data node 18 and the data node 20 currently are assigned to the LIGHT and NORMAL categories, respectively, the data nodes 18, 20 each instead re-optimizes the query plan to carry out a hash aggregation operation and a hash join operation.

Use of the adaptive query planning methodology described in this disclosure, which implements a dynamically calculated work memory configuration reflecting the current system load, results in improved query execution efficiency or performance with respect to solutions using fixed work memory configuration. By using the more accurate work memory configuration, rather than a predetermined, or fixed, value, the adaptive query planner can generate a modified or optimized query plan tailored to the current work environment at the data nodes, resulting in improved performance of the distributed parallel database system, reduced query response time, improved memory resource utilization and reduced data spilling.

Aspects of this disclosure are described herein with reference to flowchart illustrations or block diagrams, in which each block or any combination of blocks can be implemented by computer program instructions. The instructions are provided to a processor of a general purpose computer, special purpose computer, or other programmable data processing apparatus to effectuate a machine or article of manufacture, and when executed by the processor the instructions create means for implementing the functions, acts or events specified in each block or combination of blocks in the diagrams.

In this regard, each block in the flowchart or block diagrams corresponds to a module, segment, or portion of code that including one or more executable instructions for implementing the specified logical function(s). It should also be noted that, in some alternative implementations, the functionality associated with any block can occur out of the order noted in the figures. For example, two blocks shown in succession can, in fact, be executed substantially concurrently, or blocks can sometimes be executed in reverse order.

A person of ordinary skill in the art will appreciate that aspects of this disclosure can be embodied as a device, system, method or computer program product. Accordingly, aspects of this disclosure, generally referred to herein as circuits, modules, components or systems, can be embodied in hardware, in software (including firmware, resident software, micro-code, etc.), or in any combination of software and hardware, including computer program products embodied in a computer-readable medium having computer-readable program code embodied thereon.

In this respect, any combination of one or more computer readable media can be utilized, including, but not limited to, an electronic, magnetic, optical, electromagnetic, infrared, or semiconductor system, apparatus, or device, or any suitable combination of these. More specific examples of computer readable storage media would include the following nonexhaustive list: a portable computer diskette, a hard disk, a random access memory (RAM), a read-only memory (ROM), an erasable programmable read-only memory (EPROM), a Flash memory, a portable compact disc read-only memory (CD-ROM), an optical storage device, network-attached storage (NAS), a storage area network (SAN), magnetic tape, or any suitable combination of these. In the context of this disclosure, a computer readable storage medium can include any tangible medium that is capable of containing or storing program instructions for use by or in connection with a data processing system, apparatus, or device.

Computer program code for carrying out operations regarding aspects of this disclosure can be written in any combination of one or more programming languages, including object oriented programming languages such as Java, Smalltalk, C++, or the like, as well as conventional procedural programming languages, such as the "C," FORTRAN, COBOL, Pascal, or the like. The program code can execute entirely on an individual personal computer, as a stand-alone software package, partly on a client computer and partly on a remote server computer, entirely on a remote server or computer, or on a cluster of distributed computer nodes. In general, a remote computer, server or cluster of distributed computer nodes can be connected to an individual (user) computer through any type of network, including a local area network (LAN), a wide area network (WAN), an Internet access point, or any combination of these.

It will be understood that various modifications can be made. For example, useful results still could be achieved if steps of the disclosed techniques were performed in a different order, and/or if components in the disclosed systems were combined in a different manner and/or replaced or supplemented by other components. Accordingly, other implementations are within the scope of the following claims.

**Claims**

1. A method for adaptively generating a query execution plan in a distributed relational database management system, the distributed relational database management system comprising at least one coordinator node and a cluster of data nodes, wherein the method is performed by the at least one coordinator node, the method comprising:

   periodically receiving (88), with a processor, memory usage data from each of the data nodes;
   calculating (90) an average memory load corresponding to the data nodes usingthe memory usage data;
   assigning (92) a memory mode to the data nodes based on the calculated average memory load, wherein the memory mode indicates an approximate level of memory usage or availability among the data nodes; and
   calculating (94) an available global work memory based on the memory mode, wherein the available global work memory corresponds to the average memory space available on each of the data nodes that form the cluster;
   the method further comprising:

   receiving (80) a query request from a client device interconnected with the database by a network associated with the cluster;
   generating (86, 96) the query execution plan for the data nodes based on the available global work memory and segmenting the execution plan (98) ; and
   send (100) the query plan segments to each of the data nodes for local execution on each of the data nodes;
   wherein the assigned memory mode is a first category when the average memory load is below a first predetermined percentage of a system capacity, a second category when the average memory load is from the first predetermined percentage to a second predetermined percentage of the system capacity, or a third category when the average memory load is above the second predetermined percentage of the system capacity, wherein the value of the second predetermined percentage is greater than the value of the first predetermined percentage and wherein the system capacity corresponds to an aggregate capacity of the data nodes; and
   wherein the available global work memory is calculated by multiplying the available system memory for the query by a memory load factor corresponding to the assigned memory mode, the load factor being selected from
   a first load factor greater than one-half corresponding to the first category,
   a second load factor between three-tenths and seven-tenths corresponding to the second category if the query includes a JOIN operator, and a third load factor between four-tenths and eight-tenths corresponding to the second category if the query does not include a JOIN operator, and
   a fourth load factor between one-tenth and five-tenths corresponding to the third category, wherein the first load factor is greater than the second load factor, the second load factor is greater than the third load factor, and the third load factor is greater than the fourth load factor;
   wherein the average memory load is calculated as a statistical mean based on the memory usage data corresponding to all of the data nodes associated with the cluster.

2. The method of claim 1, wherein the available system memory for the query is calculated based on an aggregate system memory size, an aggregate buffer memory area size, an aggregate additional overhead memory area size, and an average number of client connections associated with the database.

3. The method of claim 1 or 2 wherein generating the query execution plan further comprises:

   compiling a syntax tree based on the query request;

creating a plurality of candidate query execution plans based on the syntax tree;
substantially optimizing the query execution plan based on at least one of the candidate query execution plans and the available work memory;
segmenting the query execution plan into a plurality of query execution plan segments; and
sending at least one of the query execution plan segments to each of the data nodes.

4. A coordinator node for adaptively generating a query execution plan in a distributed relational database management system, the distributed relational database management system comprising at least one coordinator node and a cluster of data nodes, wherein the coordinator node is configured to:

receive a query request from a client device coupled to the coordinator node by a network associated with the cluster,
periodically receive memory usage data, including the memory load associated with the data node, from each data node, and send at least one of a plurality of query execution plan segments to each of the data nodes; and
the coordinator node comprising:

a query compiler (42) configured to compile a syntax tree based on the query request;
a global memory load calculator (44) configured to calculate an average memory load corresponding to the data nodes based on the memory usage data;
a global memory mode categorizer (46) configured to assign a memory mode corresponding to the data nodes based on the calculated average memory load;
a global work memory calculator (48) configured to calculate an available global work memory corresponding to the data nodes based on the memory mode, wherein the available global work memory corresponds to the average memory space available on each of the data nodes that form the cluster;
a global query planner (50) configured to create a plurality of candidate query execution plans based on the syntax tree, generate and substantially optimize the query execution plan for the data nodes based on at least one of the candidate query execution plans and the available global work memory, and segment the query execution plan into query execution plan segments; and
a global execution engine (52) configured to execute a global portion of the query execution plan, wherein the query execution plan corresponds to the available work memory;

wherein the assigned memory mode is a first category when the average memory load is below a first predetermined percentage of a system capacity, a second category when the average memory load is from the first predetermined percentage to a second predetermined percentage of the system capacity, or a third category when the average memory load is above the second predetermined percentage of the system capacity, wherein the value of the second predetermined percentage is greater than the value of the first predetermined percentage and wherein the system capacity corresponds to an aggregate capacity of the data nodes; and
wherein the available global work memory is calculated by multiplying the available system memory for the query by a memory load factor corresponding to the assigned memory mode, the load factor being selected from:

a first load factor greater than one-half corresponding to the first category,
a second load factor between three-tenths and seven-tenths corresponding to the second category if the query includes a JOIN operator, and a third load factor between four-tenths and eight-tenths corresponding to the second category if the query does not include a JOIN operator, and
a fourth load factor between one-tenth and five-tenths corresponding to the third category, wherein the first load factor is greater than the second load factor, the second load factor is greater than the third load factor, and the third load factor is greater than the fourth load factor;
wherein the average memory load is calculated as a statistical mean based on the memory usage data corresponding to all of the data nodes associated with the cluster.

5. The coordinator node of claim 4, wherein the available systemmemory for the query is calculated based on an aggregate system memory size, an aggregate buffer memory area size, an aggregate additional overhead memory area size, and an average number of client connections associated with the database.

6. A data node for use in a distributed relational database management system, the distributed relational database management system comprising at least one coordinator node and a cluster of data nodes, the data node comprising:

a memory (72) that stores data corresponding to the distributed relational database management system;

a memory load monitor (62) that monitors the local memory load associated with the data node; and
a processor (74) that receives a query execution plan segment from one of the at least one coordinator nodes, modifies the query execution plan segment to create a modified query execution plan segment corresponding to the local memory load, and executes the modified query execution plan segment;
the data node further comprising:

a local memory mode categorizer (64) configured to assign a memory mode corresponding to the data node based on the local memory load;
a local work memory calculator (66) configured to calculate an available work memory corresponding to the data node based on the local memory mode; and
a local query planner (68) configured to substantially optimize the received query execution plan segment for the data node based on at least the available local work memory, wherein the data node is further configured to receive a syntax tree based on a query request from a client device interconnected with the database by a network associated with the cluster and the query execution plan segment is corresponds to the available work memory;
wherein the assigned memory mode is a first category when the average memory load is below a first predetermined percentage of a system capacity, a second category when the average memory load is from the first predetermined percentage to a second predetermined percentage of the system capacity, or a third category when the average memory load is above the second predetermined percentage of the system capacity, wherein the value of the second predetermined percentage is greater than the value of the first predetermined percentage and, wherein the system capacity corresponds to the capacity of the data nodes; and
wherein the available local work memory is calculated by multiplying the available local system memory for the query by a memory load factor corresponding to the assigned memory mode, the load factor being selected from:

a first load factor greater than one-half corresponding to the first category,
a second load factor between three-tenths and seven-tenths corresponding to the second category if the query includes a JOIN operator, and a third load factor between four-tenths and eight-tenths corresponding to the second category if the query does not include a JOIN operator, and
a fourth load factor between one-tenth and five-tenths corresponding to the third category, wherein the first load factor is greater than the second load factor, the second load factor is greater than the third load factor, and the third load factor is greater than the fourth load factor;
wherein the average memory load is calculated as a statistical mean based on the memory usage data corresponding to all of the data nodes associated with the cluster;

7. A data node according to claim 6, wherein the available local system memory for the query is calculated based on an aggregate system memory size, an aggregate buffer memory area size, an aggregate additional overhead memory area size, and an average number of client connections associated with the database.

8. A computer software product comprising instructions which, when executed by a computer, cause the computer to carry out the method of any of claims 1 to 2. 3 .

9. A computer-readable storage medium comprising instructions which, when executed by a computer, cause the computer to carry out the method of any of claims 1 to 3.


**Patentansprüche**

1. Verfahren zur adaptiven Erzeugung eines Abfrageausführungsplans in einem verteilten relationalen Datenbankverwaltungssystem, wobei das verteilte relationale Datenbankverwaltungssystem mindestens einen Koordinatorknoten und einen "Cluster" von Datenknoten umfasst, wobei das Verfahren durch den mindestens einen Koordinatorknoten durchgeführt wird, wobei das Verfahren umfasst:

periodisches Empfangen (88) von Speichernutzungsdaten mit einem Prozessor von jedem der Datenknoten;
Berechnen (90) einer mittleren Speicherlast, die den Datenknoten entspricht, unter Verwendung der Speichernutzungsdaten;
Zuordnen (92) eines Speichermodus zu den Datenknoten basierend auf der berechneten mittleren Speicherlast, wobei der Speichermodus einen ungefähren Grad von Speichernutzung oder -verfügbarkeit unter den Datenknoten angibt; und

Berechnen (94) eines verfügbaren globalen Arbeitsspeichers basierend auf dem Speichermodus, wobei der verfügbare globale Arbeitsspeicher der mittleren Speicherkapazität entspricht, die auf jedem der Datenknoten verfügbar ist, die den "Cluster" bilden;

wobei das Verfahren ferner umfasst:

Empfangen (80) einer Abfrageanforderung von einer "Client"-Vorrichtung, die mit der Datenbank durch ein Netzwerk verbunden ist, das mit dem "Cluster" assoziiert ist;

Erzeugen (86, 96) des Abfrageausführungsplans für die Datenknoten basierend auf dem verfügbaren globalen Arbeitsspeicher und Segmentieren des Ausführungsplans (98); und

Senden (100) der Abfrageplansegmente an jeden der Datenknoten zur lokalen Ausführung auf jedem der Datenknoten;

wobei der zugeordnete Speichermodus eine erste Kategorie, wenn die mittlere Speicherlast unter einem ersten vorbestimmten Prozentsatz einer Systemkapazität ist, eine zweite Kategorie, wenn die mittlere Speicherlast vom ersten vorbestimmten Prozentsatz bis zu einem vorbestimmten zweiten Prozentsatz der Systemkapazität ist, oder eine dritte Kategorie ist, wenn die mittlere Speicherlast über dem zweiten vorbestimmten Prozentsatz der Systemkapazität ist, wobei der Wert des zweiten Prozentsatzes größer als der Wert des ersten vorbestimmten Prozentsatzes ist, und

wobei die Systemkapazität einer aggregierten Kapazität der Datenknoten entspricht; und

wobei der verfügbare globale Arbeitsspeicher durch Multiplizieren des verfügbaren Systemspeichers für die Abfrage mit einem Speicherlastfaktor berechnet wird, der dem zugeordneten Speichermodus entspricht, wobei der Lastfaktor ausgewählt wird aus

einem ersten Lastfaktor über der Hälfte, welcher der ersten Kategorie entspricht, einem zweiten Lastfaktor zwischen drei Zehntel und sieben Zehntel, welcher der zweiten Kategorie entspricht, wenn die Abfrage einen JOIN-Operator umfasst, und

einem dritten Lastfaktor zwischen vier Zehntel und acht Zehntel, welcher der zweiten Kategorie entspricht, wenn die Abfrage keinen JOIN-Operator umfasst, und

einem vierten Lastfaktor zwischen einem Zehntel und fünf Zehntel, welcher der dritten Kategorie entspricht, wobei der erste Lastfaktor größer als der zweite Lastfaktor ist, der zweite Lastfaktor größer als der dritte Lastfaktor ist, und der dritte Lastfaktor größer als der vierte Lastfaktor ist;

wobei die mittlere Speicherlast als ein statistisches Mittel basierend auf den Speichernutzungsdaten berechnet wird, die allen der Datenknoten entsprechen, die mit dem "Cluster" assoziiert sind.

2. Verfahren nach Anspruch 1, wobei der verfügbare Systemspeicher für die Abfrage basierend auf einer aggregierten Systemspeichergröße, einer aggregierten Pufferspeicherbereichsgröße, einer aggregierten Größe zusätzlichen "Overhead"-Speicherbereichs und einer mittleren Anzahl von "Client"-Verbindungen berechnet wird, die mit der Datenbank assoziiert ist.

3. Verfahren nach Anspruch 1 oder 2,
wobei das Erzeugen des Abfrageausführungsplans ferner umfasst:

Kompilieren eines Syntaxbaums basierend auf der Abfrageanforderung;

Erstellen einer Mehrzahl von Kandidaten-Abfrageausführungsplänen basierend auf dem Syntaxbaum;

im Wesentlichen Optimieren des Abfrageausführungsplans basierend auf mindestens einem der Kandidaten-Abfrageausführungspläne und dem verfügbaren Arbeitsspeicher;

Segmentieren des Abfrageausführungsplans in eine Mehrzahl von Abfrageausführungsplansegmente; und

Senden mindestens eines der Abfrageausführungsplansegmente an jeden der Datenknoten.

4. Koordinatorknoten zum adaptiven Erzeugen eines Abfrageausführungsplans in einem verteilten relationalen Datenbankverwaltungssystem, wobei das verteilte relationale Datenbankverwaltungssystem mindestens einen Koordinatorknoten und einen "Cluster" von Datenknoten umfasst, wobei der Koordinatorknoten konfiguriert ist zum:

Empfangen einer Abfrageanforderung von einer "Client"-Vorrichtung, die mit der Datenbank durch ein Netzwerk gekoppelt ist, das mit dem "Cluster" assoziiert ist,

periodischen Empfangen von Speichernutzungsdaten, einschließlich der mit dem Datenknoten assoziierten Speicherlast, von jedem Datenknoten und Senden mindestens eines einer Mehrzahl von Abfrageausführungsplansegmenten an jeden der Datenknoten; und

wobei der Koordinatorknoten umfasst:

einen Abfragekompilierer (42), der zum Kompilieren eines Syntaxbaums basierend auf der Abfrageanforderung konfiguriert ist;
eine Einrichtung zur Berechnung globaler Speicherlast (44), die zum Berechnen einer den Datenknoten entsprechenden mittleren Speicherlast unter Verwendung der Speichernutzungsdaten konfiguriert ist;
eine Einrichtung zur Kategorisierung globaler Speichermodi (46), die zum Zuordnen eines den Datenknoten entsprechenden Speichermodus basierend auf der berechneten mittleren Speicherlast konfiguriert ist;
eine Einrichtung zur Berechnung globalen Arbeitsspeichers (48), die zum Berechnen eines den Datenknoten entsprechenden verfügbaren globalen Arbeitsspeichers basierend auf dem Speichermodus konfiguriert ist, wobei der verfügbare globale Arbeitsspeicher der mittleren Speicherkapazität entspricht, die auf jedem der Datenknoten verfügbar ist, die den "Cluster" bilden;
eine Einrichtung zur Planung globaler Abfragen (50), die zum Erstellen einer Mehrzahl von Kandidaten-Abfrageausführungsplänen basierend auf dem Syntaxbaum, Erzeugen und im Wesentlichen Optimieren des Abfrageausführungsplans basierend auf mindestens einem der Kandidaten-Abfrageausführungspläne und dem verfügbaren globalen Arbeitsspeicher und Segmentieren des Abfrageausführungsplans in eine Mehrzahl von Abfrageausführungsplansegmente konfiguriert ist;
eine Engine zur globalen Ausführung (52), die zum Ausführen eines globalen Teils des Abfrageausführungsplans konfiguriert ist, wobei der Abfrageausführungsplan dem verfügbaren Arbeitsspeicher entspricht;
wobei der zugeordnete Speichermodus eine erste Kategorie, wenn die mittlere Speicherlast unter einem ersten vorbestimmten Prozentsatz einer Systemkapazität ist, eine zweite Kategorie, wenn die mittlere Speicherlast vom ersten vorbestimmten Prozentsatz bis zu einem vorbestimmten zweiten Prozentsatz der Systemkapazität ist, oder eine dritte Kategorie ist, wenn die mittlere Speicherlast über dem zweiten vorbestimmten Prozentsatz der Systemkapazität ist, wobei der Wert des zweiten Prozentsatzes größer als der Wert des ersten vorbestimmten Prozentsatzes ist, und
wobei die Systemkapazität einer aggregierten Kapazität der Datenknoten entspricht; und
wobei der verfügbare globale Arbeitsspeicher durch Multiplizieren des verfügbaren Systemspeichers für die Abfrage mit einem Speicherlastfaktor berechnet wird, der dem zugeordneten Speichermodus entspricht, wobei der Lastfaktor ausgewählt wird aus
einem ersten Lastfaktor über der Hälfte, welcher der ersten Kategorie entspricht,
einem zweiten Lastfaktor zwischen drei Zehntel und sieben Zehntel, welcher der zweiten Kategorie entspricht, wenn die Abfrage einen JOIN-Operator umfasst, und
einem dritten Lastfaktor zwischen vier Zehntel und acht Zehntel, welcher der zweiten Kategorie entspricht, wenn die Abfrage keinen JOIN-Operator umfasst, und
einem vierten Lastfaktor zwischen einem Zehntel und fünf Zehntel, welcher der dritten Kategorie entspricht, wobei der erste Lastfaktor größer als der zweite Lastfaktor ist, der zweite Lastfaktor größer als der dritte Lastfaktor ist, und der dritte Lastfaktor größer als der vierte Lastfaktor ist;
wobei die mittlere Speicherlast als ein statistisches Mittel basierend auf den Speichernutzungsdaten berechnet wird, die allen der Datenknoten entsprechen, die mit dem "Cluster" assoziiert sind.

5. Koordinatorknoten nach Anspruch 4, wobei der verfügbare Systemspeicher für die Abfrage basierend auf einer aggregierten Systemspeichergröße, einer aggregierten Pufferspeicherbereichsgröße, einer aggregierten Größe zusätzlichen "Overhead"-Speicherbereichs und einer mittleren Anzahl von "Client"-Verbindungen berechnet wird, die mit der Datenbank assoziiert ist.

6. Datenknoten zur Verwendung in einem verteilten relationalen Datenbankverwaltungssystem, wobei das verteilte relationale Datenbankverwaltungssystem mindestens einen Koordinatorknoten und einen "Cluster" von Datenknoten umfasst, wobei der Datenknoten umfasst:

einen Speicher (72), der Daten speichert, die dem verteilten relationalen Datenbankverwaltungssystem entsprechen;
eine Speicherlastüberwachungseinrichtung (62), welche die lokale Speicherlast überwacht, die mit dem Datenknoten assoziiert ist; und
einen Prozessor (74), der ein Abfrageausführungsplansegment von einem des mindestens einen Koordinatorknotens empfängt, das Abfrageausführungsplansegment modifiziert, um eine modifiziertes Abfrageausführungsplansegment zu erstellen, das der lokalen Speicherlast entspricht, und das modifizierte Abfrageausführungsplansegment ausführt;
wobei der Datenknoten ferner umfasst:

eine Einrichtung zur Kategorisierung lokaler Speichermodi (64), die zum Zuordnen eines dem Datenknoten entsprechenden Speichermodus basierend auf der lokalen Speicherlast konfiguriert ist;

eine Einrichtung zur Berechnung lokalen Arbeitsspeichers (66), die zum Zuordnen eines dem Datenknoten entsprechenden verfügbaren Arbeitsspeichers basierend auf dem lokalen Speichermodus konfiguriert ist; und

eine Einrichtung zur Planung lokaler Abfragen (68), die zum im Wesentlichen Optimieren des empfangenen Abfrageausführungsplansegments für den Datenknoten wenigstens basierend auf dem verfügbaren lokalen Arbeitsspeicher konfiguriert ist,

wobei der Datenknoten ferner zum Empfangen eines Syntaxbaums konfiguriert ist,

der auf einer Abfrageanforderung von einer "Client"-Vorrichtung basiert, die mit der Datenbank durch ein Netzwerk verbunden ist, das mit dem "Cluster" assoziiert ist,

und das Abfrageausführungsplansegment dem verfügbaren Arbeitsspeicher entspricht;

wobei der zugeordnete Speichermodus eine erste Kategorie, wenn die mittlere Speicherlast unter einem ersten vorbestimmten Prozentsatz einer Systemkapazität ist,

eine zweite Kategorie, wenn die mittlere Speicherlast vom ersten vorbestimmten Prozentsatz bis zu einem vorbestimmten zweiten Prozentsatz der Systemkapazität ist,

oder eine dritte Kategorie ist, wenn die mittlere Speicherlast über dem zweiten vorbestimmten Prozentsatz der Systemkapazität ist, wobei der Wert des zweiten vorbestimmten Prozentsatzes größer als der Wert des ersten vorbestimmten Prozentsatzes ist, und wobei die Systemkapazität einer aggregierten Kapazität der Datenknoten entspricht; und

wobei der verfügbare lokale Arbeitsspeicher durch Multiplizieren des verfügbaren lokalen Systemspeichers für die Abfrage mit einem Speicherlastfaktor berechnet wird, der dem zugeordneten Speichermodus entspricht, wobei der Lastfaktor ausgewählt wird aus

einem ersten Lastfaktor über der Hälfte, welcher der ersten Kategorie entspricht,

einem zweiten Lastfaktor zwischen drei Zehntel und sieben Zehntel, welcher der zweiten Kategorie entspricht, wenn die Abfrage einen JOIN-Operator umfasst, und

einem dritten Lastfaktor zwischen vier Zehntel und acht Zehntel, welcher der zweiten Kategorie entspricht, wenn die Abfrage keinen JOIN-Operator umfasst, und

einem vierten Lastfaktor zwischen einem Zehntel und fünf Zehntel, welcher der dritten Kategorie entspricht, wobei der erste Lastfaktor größer als der zweite Lastfaktor ist, der zweite Lastfaktor größer als der dritte Lastfaktor ist, und der dritte Lastfaktor größer als der vierte Lastfaktor ist;

wobei die mittlere Speicherlast als ein statistisches Mittel basierend auf den Speichernutzungsdaten berechnet wird, die allen der Datenknoten entsprechen, die mit dem "Cluster" assoziiert sind.

7. Datenknoten nach Anspruch 6, wobei der verfügbare lokale Systemspeicher für die Abfrage basierend auf einer aggregierten Systemspeichergröße, einer aggregierten Pufferspeicherbereichsgröße, einer aggregierten Größe zusätzlichen "Overhead"-Speicherbereichs und einer mittleren Anzahl von "Client"-Verbindungen berechnet wird, die mit der Datenbank assoziiert ist.

8. Computersoftwareprodukt, umfassend Anweisungen, die bei Ausführung durch einen Computer den Computer zum Durchführen des Verfahrens nach einem der Ansprüche 1 bis 3 veranlassen.

9. Computerlesbares Speichermedium, umfassend Anweisungen, die bei Ausführung durch einen Computer den Computer zum Durchführen des Verfahrens nach einem der Ansprüche 1 bis 3 veranlassen.

**Revendications**

1. Procédé destiné à générer de manière adaptative un plan d'exécution d'interrogation dans un système de gestion de base de données relationnelle répartie, le système de gestion de base de données relationnelle répartie comprenant au moins un nœud coordinateur et une grappe de nœuds de données, le procédé étant réalisé par l'au moins un nœud coordinateur, le procédé comprenant :

la réception périodique (88), avec un processeur, de données d'utilisation de mémoire en provenance de chacun des nœuds de données ;

le calcul (90) d'une charge de mémoire moyenne correspondant aux nœuds de données à l'aide des données d'utilisation de mémoire ;

l'attribution (92) d'un mode de mémoire aux nœuds de données sur la base de la charge de mémoire moyenne calculée, le mode de mémoire indiquant un niveau approximatif d'utilisation ou de disponibilité de la mémoire parmi les nœuds de données ; et

le calcul (94) d'une mémoire de travail global disponible sur la base du mode de mémoire, la mémoire de travail global disponible correspondant à l'espace mémoire moyen disponible sur chacun des nœuds de données qui forment la grappe ;

le procédé comprenant en outre :

la réception (80) d'une demande d'interrogation en provenance d'un dispositif client interconnecté avec la base de données par un réseau associé à la grappe ;

la génération (86, 96) du plan d'exécution d'interrogation pour les nœuds de données sur la base de la mémoire de travail globale disponible, et la segmentation du plan d'exécution (98) ; et

l'envoi (100) des segments du plan d'interrogation à chacun des nœuds de données pour une exécution locale sur chacun des nœuds de données ;

le mode de mémoire attribué étant une première catégorie lorsque la charge de mémoire moyenne est inférieure à un premier pourcentage prédéterminé d'une capacité de système, une deuxième catégorie lorsque la charge de mémoire moyenne est comprise entre le premier pourcentage prédéterminé et un second pourcentage prédéterminé de la capacité de système, ou une troisième catégorie lorsque la charge de mémoire moyenne est supérieure au second pourcentage prédéterminé de la capacité de système, la valeur du second pourcentage prédéterminé étant supérieure à la valeur du premier pourcentage prédéterminé et la capacité de système correspondant à une capacité agrégée des nœuds de données ; et

la mémoire de travail globale disponible étant calculée en multipliant la mémoire système disponible pour l'interrogation par un facteur de charge de mémoire correspondant au mode de mémoire attribué, le facteur de charge étant sélectionné à partir de

un premier facteur de charge supérieur à la moitié correspondant à la première catégorie,

un deuxième facteur de charge compris entre trois dixièmes et sept dixièmes correspondant à la deuxième catégorie si l'interrogation comprend un opérateur JOIN,

et un troisième facteur de charge compris entre quatre dixièmes et huit dixièmes correspondant à la deuxième catégorie si l'interrogation ne comprend pas un opérateur JOIN, et

un quatrième facteur de charge entre un dixième et cinq dixièmes correspondant à la troisième catégorie, le premier facteur de charge étant supérieur au deuxième facteur de charge, le deuxième facteur de charge étant supérieur au troisième facteur de charge,

et le troisième facteur de charge étant supérieur au quatrième facteur de charge ;

la charge de mémoire moyenne étant calculée comme une moyenne statistique sur la base des données d'utilisation de mémoire correspondant à la totalité des nœuds de données associés à la grappe.

2. Procédé selon la revendication 1, la mémoire système disponible pour l'interrogation étant calculée sur la base d'une taille de mémoire système agrégée, d'une taille de zone de mémoire tampon agrégée, d'une taille de zone de mémoire auxiliaire supplémentaire agrégée, et d'un nombre moyen de connexions client associées à la base de données.

3. Procédé selon la revendication 1 ou 2, la génération du plan d'exécution d'interrogation comprenant en outre :

la compilation d'un arbre syntaxique sur la base de la demande d'interrogation ;

la création d'une pluralité de plans d'exécution d'interrogation candidats sur la base de l'arbre syntaxique ;

l'optimisation sensiblement du plan d'exécution d'interrogation sur la base d'au moins un des plans d'exécution d'interrogation candidats et de la mémoire de travail disponible ;

la segmentation du plan d'exécution d'interrogation en une pluralité de segments de plan d'exécution d'interrogation ; et

l'envoi d'au moins un des segments de plan d'exécution d'interrogation à chacun des nœuds de données.

4. Nœud coordinateur destiné à générer de manière adaptative un plan d'exécution d'interrogation dans un système de gestion de base de données relationnelle répartie, le système de gestion de base de données relationnelle répartie comprenant au moins un nœud coordinateur et une grappe de nœuds de données, le nœud coordinateur étant configuré pour :

recevoir une demande d'interrogation en provenance d'un dispositif client couplé au nœud coordinateur par un réseau associé à la grappe,

recevoir périodiquement des données d'utilisation de mémoire, comprenant la charge de mémoire associée au nœud de données, à partir de chaque nœud de données, et

envoyer au moins l'un d'une pluralité de segments de plan d'exécution d'interrogation à chacun des nœuds de données ; et

le nœud coordinateur comprenant :

un compilateur d'interrogation (42) configuré pour compiler un arbre syntaxique sur la base de la demande d'interrogation ;

un calculateur de charge de mémoire globale (44) configuré pour calculer une charge de mémoire moyenne correspondant aux nœuds de données sur la base des données d'utilisation de mémoire ;

un catégoriseur de mode de mémoire global (46) configuré pour attribuer un mode de mémoire correspondant aux nœuds de données sur la base de la charge de mémoire moyenne calculée ;

un calculateur de mémoire de travail globale (48) configuré pour calculer une mémoire de travail globale disponible correspondant aux nœuds de données sur la base du mode de mémoire, la mémoire de travail globale disponible correspondant à l'espace mémoire moyen disponible sur chacun des nœuds de données qui forment la grappe ;

un planificateur d'interrogation global (50) configuré pour créer une pluralité de plans d'exécution d'interrogation candidats sur la base de l'arbre syntaxique, générer et

optimiser sensiblement le plan d'exécution d'interrogations pour les nœuds de données sur la base d'au moins un des plans d'exécution d'interrogation candidats et de la mémoire de travail globale disponible, et segmenter le plan d'exécution d'interrogations en segments de plan d'exécution d'interrogations ; et

un moteur d'exécution global (52) configuré pour exécuter une partie globale du plan d'exécution d'interrogation, le plan d'exécution d'interrogation correspondant à la mémoire de travail disponible ;

le mode de mémoire attribué étant une première catégorie lorsque la charge de mémoire moyenne est inférieure à un premier pourcentage prédéterminé d'une capacité de système, une deuxième catégorie lorsque la charge de mémoire moyenne est comprise entre le premier pourcentage prédéterminé et un second pourcentage prédéterminé de la capacité de système, ou une troisième catégorie lorsque la charge de mémoire moyenne est supérieure au second pourcentage prédéterminé de la capacité de système, la valeur du second pourcentage prédéterminé étant supérieure à la valeur du premier pourcentage prédéterminé et la capacité de système correspondant à une capacité agrégée des nœuds de données ; et

la mémoire de travail globale disponible étant calculée en multipliant la mémoire système disponible pour l'interrogation par un facteur de charge de mémoire correspondant au mode de mémoire attribué, le facteur de charge étant sélectionné parmi :

un premier facteur de charge supérieur à la moitié correspondant à la première catégorie,

un deuxième facteur de charge compris entre trois dixièmes et sept dixièmes correspondant à la deuxième catégorie si l'interrogation comprend un opérateur JOIN,

et un troisième facteur de charge compris entre quatre dixièmes et huit dixièmes correspondant à la deuxième catégorie si l'interrogation ne comprend pas un opérateur JOIN, et

un quatrième facteur de charge entre un dixième et cinq dixièmes correspondant à la troisième catégorie, le premier facteur de charge étant supérieur au deuxième facteur de charge, le deuxième facteur de charge étant supérieur au troisième facteur de charge,

et le troisième facteur de charge étant supérieur au quatrième facteur de charge ;

la charge de mémoire moyenne étant calculée en tant que moyenne statistique sur la base des données d'utilisation de mémoire correspondant à la totalité des nœuds de données associés à la grappe.

5. Nœud coordinateur selon la revendication 4, la mémoire système disponible pour l'interrogation étant calculée sur la base d'une taille de mémoire système agrégée, d'une taille de zone de mémoire tampon agrégée, d'une taille de zone de mémoire auxiliaire supplémentaire agrégée, et d'un nombre moyen de connexions client associées à la base de données.

6. Nœud de données destiné à être utilisé dans un système de gestion de base de données relationnelle répartie, le système de gestion de base de données relationnelle répartie comprenant au moins un nœud coordinateur et une grappe de nœuds de données, le nœud de données comprenant :

une mémoire (72) qui stocke des données correspondant au système de gestion de base de données relationnelle répartie ;

un dispositif de surveillance de charge de mémoire (62) qui surveille la charge de mémoire locale associée au nœud de données, et

un processeur (74) qui reçoit un segment de plan d'exécution d'interrogation en provenance de l'un des au moins un nœuds coordinateurs, modifie le segment de plan d'exécution d'interrogation pour créer un segment de plan d'exécution d'interrogation modifié correspondant à la charge de mémoire locale, et exécute le segment de plan d'exécution d'interrogation modifié ;

le nœud de données comprenant en outre :

un catégoriseur de mode de mémoire local (64) configuré pour attribuer un mode de mémoire correspondant au nœud de données sur la base de la charge de mémoire locale ;
un calculateur de mémoire de travail locale (66) configuré pour calculer une mémoire de travail disponible correspondant au nœud de données sur la base du mode de mémoire locale ; et
un planificateur d'interrogation locale (68) configuré pour optimiser sensiblement le segment de plan d'exécution d'interrogation reçu pour le nœud de données sur la base d'au moins la mémoire de travail locale disponible, le nœud de données étant en outre configuré pour recevoir un arbre syntaxique sur la base d'une demande d'interrogation en provenance d'un dispositif client interconnecté avec la base de données par un réseau associé à la grappe, et le segment de plan d'exécution d'interrogation correspondant à la mémoire de travail disponible ;
le mode de mémoire attribué étant une première catégorie lorsque la charge de mémoire moyenne est inférieure à un premier pourcentage prédéterminé d'une capacité de système, une deuxième catégorie lorsque la charge de mémoire moyenne est comprise entre le premier pourcentage prédéterminé et un second pourcentage prédéterminé de la capacité de système, ou une troisième catégorie lorsque la charge de mémoire moyenne est supérieure au second pourcentage prédéterminé de la capacité de système, la valeur du second pourcentage prédéterminé étant supérieure à la valeur du premier pourcentage prédéterminé et, la capacité de système correspondant à la capacité des nœuds de données ; et
la mémoire de travail locale disponible étant calculée en multipliant la mémoire système locale disponible pour l'interrogation par un facteur de charge de mémoire correspondant au mode de mémoire attribué, le facteur de charge étant sélectionné parmi :

un premier facteur de charge supérieur à la moitié correspondant à la première catégorie,
un deuxième facteur de charge compris entre trois dixièmes et sept dixièmes correspondant à la deuxième catégorie si l'interrogation comprend un opérateur JOIN,
et un troisième facteur de charge compris entre quatre dixièmes et huit dixièmes correspondant à la deuxième catégorie si l'interrogation ne comprend pas un opérateur JOIN, et
un quatrième facteur de charge entre un dixième et cinq dixièmes correspondant à la troisième catégorie, le premier facteur de charge étant supérieur au deuxième facteur de charge, le deuxième facteur de charge étant supérieur au troisième facteur de charge,
et le troisième facteur de charge étant supérieur au quatrième facteur de charge ;
la charge de mémoire moyenne étant calculée en tant que moyenne statistique sur la base des données d'utilisation de mémoire correspondant à la totalité des nœuds de données associés à la grappe.

7. Nœud de données selon la revendication 6, la mémoire système locale disponible pour l'interrogation étant calculée sur la base d'une taille de mémoire système agrégée, d'une taille de zone de mémoire tampon agrégée, d'une taille de zone de mémoire auxiliaire supplémentaire agrégée, et d'un nombre moyen de connexions client associées à la base de données.

8. Produit logiciel informatique comprenant des instructions qui, lorsqu'elles sont exécutées par un ordinateur, amènent l'ordinateur à mettre en œuvre le procédé selon l'une quelconque des revendications 1 à 3.

9. Support de stockage lisible par ordinateur comprenant des instructions qui, lorsqu ' elles sont exécutées par un ordinateur, amènent l'ordinateur à mettre en œuvre le procédé selon l'une quelconque des revendications 1 à 3.

**FIG. 1**

**FIG. 2**

EP 3 251 034 B1

EP 3 251 034 B1

60

| 62 | 64 | 66 | 68 |

Memory Load Monitor

Local Memory Mode Categorizer

Local Work Memory Calculator

Local Query Planner

76

Processor

Memory

Local Execution Engine

74

72

70

**FIG. 3**

```
                    ┌─────────────┐
                    │    START    │
                    └─────────────┘
                           │
                           ▼
        ┌──────────────────────────────────────┐
 80 ────┤           Receive query              │
        └──────────────────────────────────────┘
                           │
                           ▼
        ┌──────────────────────────────────────┐
 82 ────┤            Parse query               │
        └──────────────────────────────────────┘
                           │
                           ▼
        ┌──────────────────────────────────────┐
 84 ────┤        Compile semantic tree         │
        └──────────────────────────────────────┘
                           │
                           ▼
        ┌──────────────────────────────────────┐
 86 ────┤     Create candidate execution plans │
        └──────────────────────────────────────┘
                           │
                           ▼
        ┌ ─ ─ ─ ─ ─ ─ ─ ─ ─ ─ ─ ─ ─ ─ ─ ─ ─ ─ ┐
 88 ────    Receive memory usage data
        └ ─ ─ ─ ─ ─ ─ ─ ─ ─ ─ ─ ─ ─ ─ ─ ─ ─ ─ ┘
                           │
                           ▼
        ┌ ─ ─ ─ ─ ─ ─ ─ ─ ─ ─ ─ ─ ─ ─ ─ ─ ─ ─ ┐
 90 ────    Calculate global memory load
        └ ─ ─ ─ ─ ─ ─ ─ ─ ─ ─ ─ ─ ─ ─ ─ ─ ─ ─ ┘
                           │
                           ▼
        ┌ ─ ─ ─ ─ ─ ─ ─ ─ ─ ─ ─ ─ ─ ─ ─ ─ ─ ─ ┐
 92 ────    Categorize memory mode
        └ ─ ─ ─ ─ ─ ─ ─ ─ ─ ─ ─ ─ ─ ─ ─ ─ ─ ─ ┘
                           │
                           ▼
        ┌ ─ ─ ─ ─ ─ ─ ─ ─ ─ ─ ─ ─ ─ ─ ─ ─ ─ ─ ┐
 94 ────    Calculate available global work memory
        └ ─ ─ ─ ─ ─ ─ ─ ─ ─ ─ ─ ─ ─ ─ ─ ─ ─ ─ ┘
                           │
                           ▼
        ┌──────────────────────────────────────┐
 96 ────┤        Optimize execution plan       │
        └──────────────────────────────────────┘
                           │
                           ▼
        ┌──────────────────────────────────────┐
 98 ────┤        Segment execution plan        │
        └──────────────────────────────────────┘
                           │
                           ▼
        ┌──────────────────────────────────────┐
100 ────┤   Send local plan segments to data nodes │
        └──────────────────────────────────────┘
                           │
                           ▼
        ┌ ─ ─ ─ ─ ─ ─ ─ ─ ─ ─ ─ ─ ─ ─ ─ ─ ─ ─ ┐
102 ────    Send semantic tree to data nodes
        └ ─ ─ ─ ─ ─ ─ ─ ─ ─ ─ ─ ─ ─ ─ ─ ─ ─ ─ ┘
                           │
                           ▼
                    ┌─────────────┐
                    │     END     │
                    └─────────────┘
```

**FIG. 4**

START

110 ——— Receive semantic tree

112 ——— Receive local plan segments

114 ——— Monitor memory usage

116 ——— Send memory usage data to coordinators

118 ——— Categorize local memory mode

120 ——— Calculate available local work memory

122 ——— Re-optimize local plan segments

124 ——— Execute local plan segments

END

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030212668 A